# EUROPEAN PATENT APPLICATION

(11) **EP 3 789 282 A1**
(43) Date of publication of application: **10.03.2021**
(21) Application number: 20193684.6
(22) Date of filing: 31.08.2020
(51) Int. Cl.: B62J 1/20, B62J 1/22

(54) **IMPROVED SADDLE COVER FOR CYCLES AND RELATED MANUFACTURING METHOD**

(30) Priority: 03.09.2019 IT 201900015467; 03.09.2019 IT 201900015473
(71) Applicant: SELLE ITALIA S.r.l., 31011 Casella d'Asolo (Treviso) (IT)
(72) Inventor: BIGOLIN, Giuseppe, I-31011 Asolo, TREVISO (IT); PEROTTO, Riccardo, I-31011 Asolo, TREVISO (IT)
(74) Representative: Mitola, Marco

(57) **Abstract**

A saddle cover (4) for a bicycle saddle having a saddle cover body (8) which overall delimits a cavity (12) configured to cover and house at least partially a bicycle saddle, said saddle cover body (8) comprising:
- a shock-absorbing portion (16), configured to cover the seat of the associable saddle at least partially,
- a fitting portion (20) arranged around the perimeter of the shock-absorbing portion (16) and configured to embrace and cover said saddle at least partially. The fitting portion (20) is made of an injected thermoplastic material, wherein said fitting portion (20) has, on a lower face (24), opposite to the shock-absorbing portion (16), an inlet opening (28) adapted to facilitate the insertion and covering by superposition of the associable saddle. Said inlet opening (28) has a trapezoidal shape and the lower face (24) is substantially taut and flat.

## Description

### FIELD OF APPLICATION

The present invention relates to an improved saddle cover for cycles and the related manufacturing method.

### BACKGROUND ART

As it is known, in the cycle sector the need to apply saddle covers to the saddles is felt, both for comfort as well as for aesthetic reasons.

In fact, the saddle cover is a padded element which can make the saddle more comfortable; furthermore, the saddle cover also constitutes an element which modifies the aesthetics of the saddle itself and which may also hide defects, tears and the like.

The saddle cover must be capable of being applied to the saddle in an effective, rapid manner and must not move during use and must also not constitute a nuisance for the user. This means that the saddle cover must, at the same time, be well fastened on the saddle but it must also allow an easy sliding of the buttocks of the user with respect to the saddle cover itself, thus avoiding, for example, annoying 'sticking'.

The needs described above are however not easy to combine in the same device. In fact, to obtain a safe and stable fastening on the saddle, the saddle cover must be equipped with suitable fastening means and/or it must be made of a particularly gripping material, such as, for example, a polymer material, which inevitably tends to have an excessive grip even on the user.

Another manner to obtain a stable fastening of the saddle cover on the saddle is to provide a pleated lower portion equipped with clamping means, typically a cord with a relative sliding cursor. On the one hand, such a solution ensures a solid fastening of the saddle cover to the saddle, but on the other it has some undoubted disadvantages. In fact, the cord is an unaesthetic element which, furthermore, is an element which hangs or dangles during the use of the cycle. Furthermore, the pleated portion often has a not very appealing aesthetics.

### OVERVIEW OF THE INVENTION

Therefore, the need to solve the drawbacks and limitations mentioned above with reference to the prior art is felt.

Such a need is met by a saddle cover in accordance with claim 1, by a method for manufacturing a saddle cover in accordance with claim 12.

### DESCRIPTION OF THE DRAWINGS

Further features and advantages of the present invention will become more apparent from the following description of preferred embodiments thereof given by way of non-limiting examples, in which:

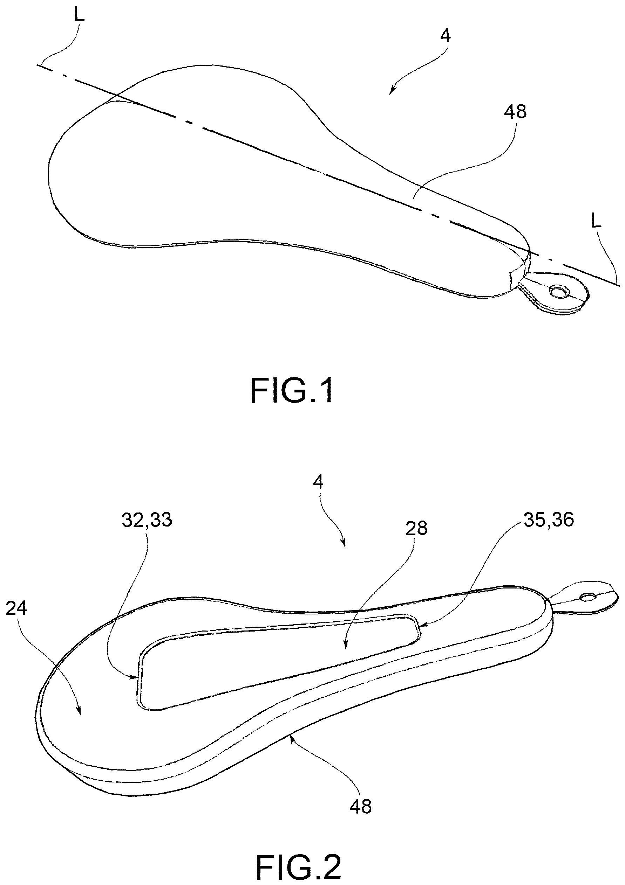

Figures 1-2 show perspective views, from different angles, of a saddle cover according to a first embodiment of the present invention;

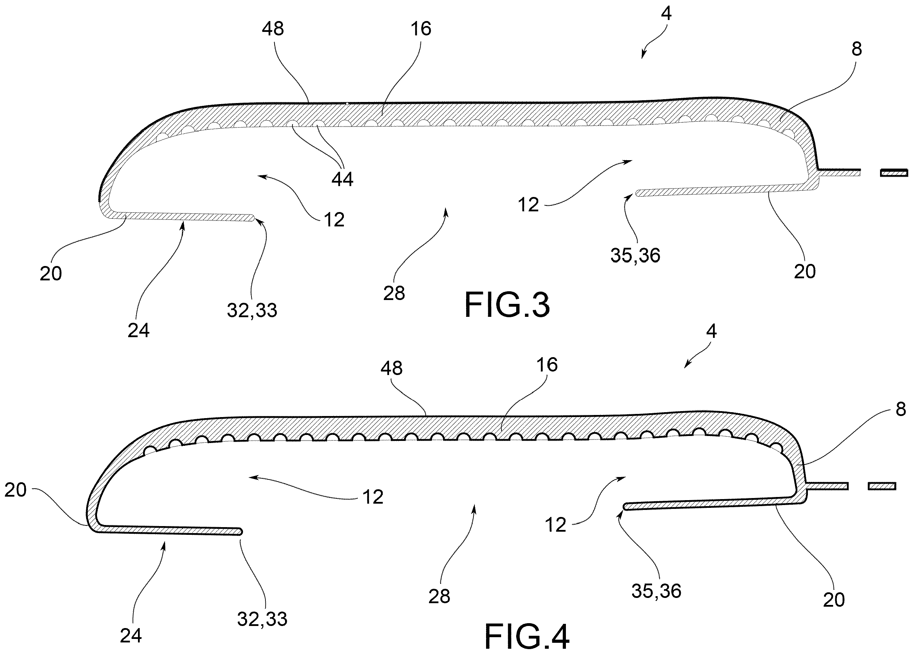

Figures 3-4 show sectional views, along the longitudinal sectional plane L-L indicated in Figure 1, of possible embodiments of a saddle cover according to the present invention;

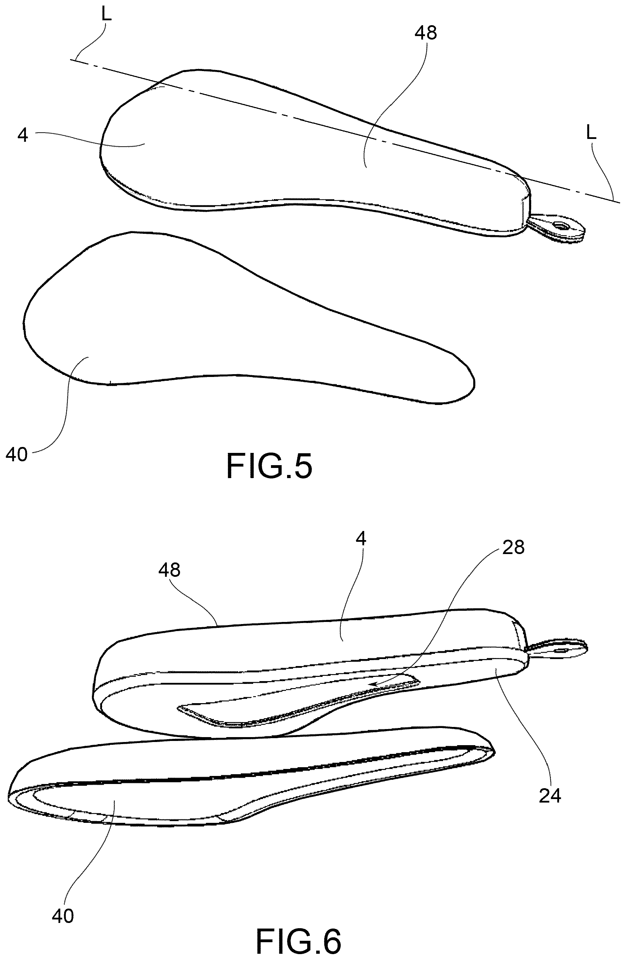

Figures 5-6 show perspective views, from different angles, of a saddle cover according to a second embodiment of the present invention;

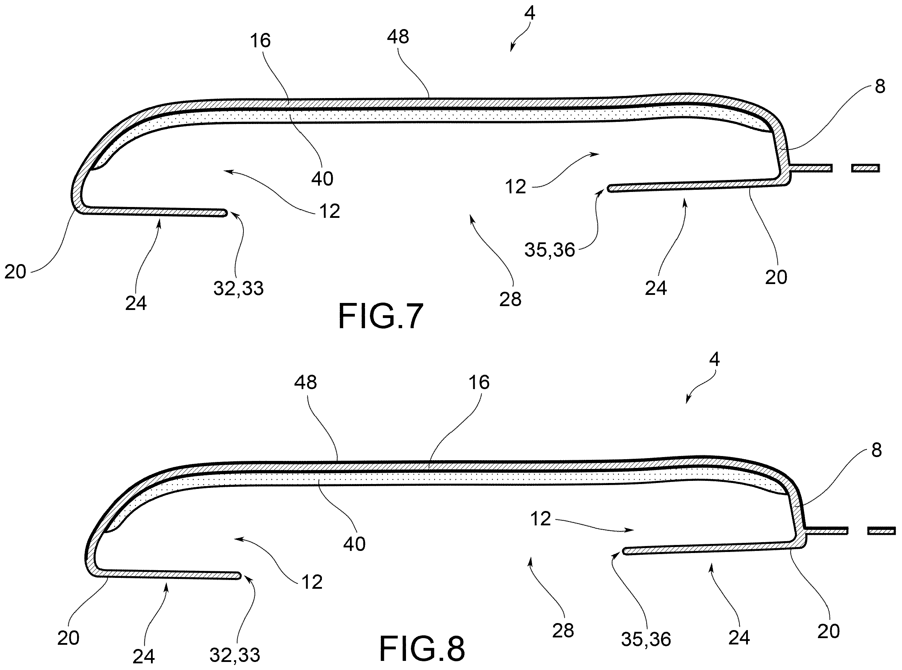

Figures 7-8 show sectional views, along the longitudinal sectional plane L-L indicated in Figure 5, of possible embodiments of a saddle cover according to the present invention.

Elements or parts in common to the embodiments described will be indicated hereafter using the same reference numerals.

### DETAILED DESCRIPTION

With reference to the aforementioned Figures, reference numeral 4 overall indicates a diagrammatic view of a saddle cover according to the present invention.

For the purposes of the present invention, it should be specified that the saddle cover 4 must be understood in a broad sense, i.e., independently of the specific shapes of the saddle, with respect to which it will obviously be counter-shaped, and independently of the applications of the saddle.

The saddle cover 4 comprises a saddle cover body 8 which overall delimits a cavity 12 configured to cover and house at least partially a bicycle saddle (not shown).

The saddle cover body 8 comprises a shock-absorbing portion 16, configured to cover the seat of the associable saddle at least partially, and a fitting portion 20, arranged around the perimeter of the shock-absorbing portion 16 and configured to embrace and cover said saddle at least partially.

The shock-absorbing portion 16 and the fitting portion 20 are integral with each other, or, in any case, are seamlessly connected to each other.

The shock-absorbing portion 16 has the function of providing a cushion between the saddle and the buttocks of the user, so as to improve the comfort of the saddle.

The fitting portion 20 is made of an injected thermoplastic material and has, on a lower face 24, opposite to the shock-absorbing portion 16, an inlet opening 28 adapted to facilitate the insertion and covering by superposition of the associable saddle. Advantageously, said lower face 24 is substantially taut and flat. The lower face 24 actually forms an undercut with respect to the associable saddle which opposes the removal of the saddle cover 4 from the saddle itself. The inlet opening 28 allows the application and the removal of the saddle cover with respect to the saddle.

The inlet opening 28 constitutes the means through which the saddle cover 4 may be inserted to partially cover the saddle.

According to an embodiment, said inlet opening 28 has a symmetrical configuration tapering from a rear end 32 intended to cover a rear portion of the saddle, to a front end 36 intended to cover a front portion of the saddle.

According to a possible embodiment, said inlet opening 28 has a trapezoidal shape, adapted to facilitate the insertion of the saddle cover 4 on the saddle and the subsequent removal thereof. It should be noted that such an inlet opening 28 is elastically deformable, as better described below. It should be noted that the definition 'trapezoidal' must be understood in a broad, i.e., not strictly geometric, sense. In other words, it means a geometry which tends to taper when moving from the rear end 32, intended to cover a rear portion of the saddle, to the front end 36, intended to cover a front portion of the saddle. Such a tapered geometry simply traces the geometry of the saddle itself.

According to a possible embodiment, the inlet opening 28 has a symmetrical isosceles trapezoid configuration tapering from the rear end 32 to the front end 36. The rear end 32 defines the long base 33 of the isosceles trapezoid, while the front end 36 defines the short base 35 of the isosceles trapezoid.

Preferably, the ratio of the long base 33 to the short base 35 of said isosceles trapezoid inlet opening 28 is greater than or equal to 1.5.

As mentioned above, the fitting portion 20 is made of an elastic material, so as to allow the expansion thereof during the step of fitting the saddle cover 4 on the related saddle. In fact, to obtain a stable anchorage of the saddle cover 4 on the saddle, the coupling between the saddle cover and the saddle must be by interference, i.e., the cavity 12 of the saddle cover 4 must have a slightly smaller size with respect to the saddle, so as to be able to grip onto the latter.

For this purpose, the fitting portion 20 is, for example, made of an elastomer of the SBS or TPE-S type.

Obviously, it is necessary to identify the right compromise between the elastic compliance of the saddle cover 4, in particular of the fitting portion 20 thereof, and the resistance thereof. For this purpose, preferably, the fitting portion 20 has a hardness of not less than 3 Shore A.

Furthermore, preferably, the fitting portion 20 has a minimum breaking elongation equal to 200%.

Furthermore, according to an embodiment, the fitting portion 20 has a thickness of not less than 1.5 mm. Also in this case, on the one hand, it is a matter of ensuring deformability and elasticity, so as to provide an easy fit on the saddle, and on the other hand, it is necessary to ensure adequate mechanical resistance, as well as abrasion and wear resistance, of the saddle cover 4 itself.

In turn, preferably, the shock-absorbing portion 16 has a thickness at least 30% greater with respect to the thickness of the fitting portion. In this case, the aim is to ensure an adequate comfort.

The saddle cover 4 may also be equipped with an accessory such as a padding 40, which is removably insertable into the cavity 12 of the saddle cover body 8, between the shock-absorbing portion 16 and the fitting portion 20.

For example, said padding 40 is made of a viscoelastic, flexible and/or shape memory material.

Furthermore, said padding 40 may have at least one lightening hole or skiving 44. Preferably, said at least one lightening or hole or skiving faces the cavity 12, i.e., from the side of the lower face 24.

Preferably, the shock-absorbing portion 16, on the side opposite to said cavity 12, has a non-stick coating element and/or a non-stick surface treatment 48.

It is the object of said non-stick coating element and/or of a non-stick surface treatment 48 to prevent the buttocks of the user from becoming blocked or, in any case, not sufficiently slipping on the shock-absorbing portion 16 which, as seen, is made of the same material as the saddle cover body 8 which, as seen, must instead be as gripping as possible.

Therefore, according to a possible embodiment, the non-stick coating element 48 comprises a non-stick fabric on the side opposite to the cavity 12. In other words, according to this possible embodiment, the fabric must have non-stick properties on the outer side, i.e., the side opposite to the cavity 12, so as to create an excessive grip with the buttocks of the user. At the same time, the fabric must also have adherent properties on the inner side, i.e., on the side interfacing with the material of the shock-absorbing portion 16, so that it remains firmly attached to the latter.

For example, said non-stick fabric is an elastic fabric having a basis weight between 130 and 190 grams.

According to a further embodiment, said non-stick surface treatment 48 comprises a texture which negatively traces the texture of a fabric provided with a plurality of ridges and grooves so as to overall reduce a contact surface of the shock-absorbing portion.

Alternatively, it is also possible to carry out the non-stick surface treatment 48 by means of photoengraving.

It should be noted that the coating element and the non-stick surface treatment on the shock-absorbing portion 16 are not necessarily alternatives but may also coexist on the same saddle cover 4. In other words, it is possible to manufacture a shock-absorbing portion 16 which includes both a non-stick coating element 48 as well as a portion with a non-stick surface treatment 48.

The manufacturing method as well as the method for using the present invention will now be described.

In particular, the method for manufacturing a saddle cover according to the present invention comprises the steps of:
- preparing an injection mold comprising an injection chamber,
- preparing a male which reproduces at least partially the shape of an associable saddle for a cycle and the shape of said inlet opening 28, and at least partially delimiting said injection chamber with said male,
- injecting the saddle cover body 8 into the injection chamber of the mold.

According to a possible embodiment, the method for manufacturing the saddle cover further comprises the steps of:
- inserting into the injection chamber, as a non-stick coating element 48, an elastic and non-stick fabric on the side opposite to the injection chamber, at the shock-absorbing portion 16,
- injecting the polymer material of the saddle cover body 8 so as to soak, or wet at least partially, and firmly fasten to the saddle cover body 8, said elastic and non-stick fabric.

According to a further possible embodiment, the method comprises the steps of:
- inserting into the injection chamber, as a provisional coating element 48, an elastic and non-stick fabric on the side facing the injection chamber, at the shock-absorbing portion 16,
- injecting the polymer material of the saddle cover body 8 so as to wet the elastic and non-stick fabric at least partially,
- waiting for the saddle cover body 8 to solidify,
- removing said elastic and non-stick fabric 48, so as to obtain on the shock-absorbing portion a surface which negatively traces the texture of the elastic and non-stick fabric.

The operation for removing the elastic and non-stick fabric, which, as seen, acts as a temporary coating element 48, is facilitated by the fact that said elastic and non-stick fabric has non-stick properties right on the side of the injection chamber.

The operation for removing the elastic and non-stick fabric, following the solidification of the saddle cover body 8, as seen, has the effect of negatively tracing the texture of the removed fabric. From a mechanical point of view, this means that the outer surface of the solid matrix, i.e., of the shock-absorbing portion on the side of the interface with the removed fabric, has a succession of ridges and grooves. Thereby, the contact surface between the shock-absorbing portion and an external body, such as the buttocks of the user, is significantly reduced and the gripping effect given by the shock-absorbing portion 16 itself is also significantly reduced.

Furthermore, the method according to the present invention may comprise the steps of molding a padding 40 substantially counter-shaped with respect to said cavity 12, so as to be interposed between the shock-absorbing portion 16 and the associable saddle.

Obviously, once manufactured, the saddle cover may be effectively applied to a bicycle saddle.

The operation of fitting the saddle cover 4 onto the saddle is extremely easy.

In fact it is sufficient to elastically widen the inlet opening 28 so as to allow the passage of the saddle, from the side of the upper portion, taking care of orienting the saddle cover 4 so as to align the rear end 32 of the inlet opening 28 with the rear enlarged portion of the saddle, and to align the front end 36 of the inlet opening 28 with the pointed front portion of the saddle.

Then, the shock-absorbing portion 16 is placed on the upper back of the saddle and the fitting portion 20 is tightened on the lower and/or side portion of the saddle. The elastic return of the saddle cover body facilitates the tightening and the gripping on the saddle itself.

Likewise, it is possible to remove or take off the saddle covers 4 by levering the flaps of the saddle cover body 8 which surround the inlet opening 28: such flaps may be elastically widened by hand to allow the saddle cover 4 to be removed.

As it may be appreciated from the description above, the present invention allows to overcome the drawbacks presented in the background art.

In particular, the present invention allows to obtain a saddle cover which satisfies both comfort requirements as well as aesthetic requirements.

In fact, from the point of view of comfort, the saddle cover is capable of effectively absorbing shocks and/or rubbing against the buttocks of the user and the saddle; at the same time, the saddle cover is easy and quick to assemble and does not require cord portions or similar hooking/fastening means.

The saddle cover, once fitted onto the saddle, has surfaces which are well adhered to the geometry of the saddle, perfectly copying the lines and ergonomics thereof, without presenting unaesthetic visible and/or overhanging fastening portions.

From an aesthetic point of view, it is important that the saddle cover does not have any hanging strap and does not require any additional fastening means, as in the solutions of the background art.

Simply, the fitting portion is capable of adapting to the shape of the undersaddle and to provide an adequate grip; the lines or walls of the gripping portion, from the lower side, are therefore well stretched, unlike in known solutions. In other words, the fitting portion is capable of fastening the saddle by following the profile thereof and without modifying the aesthetics thereof.

Furthermore, the saddle cover is effectively fastened to the saddle by virtue of the use of a suitable gripping material both at the upper inner side and at the fitting portion.

At the same time, the upper outer side of the saddle cover allows an easy sliding of the buttocks of the user by virtue of the use of a non-stick coating fabric or a related non-stick surface treatment, as described above.

Furthermore, the saddle cover may be easily modified according to the needs of the user by virtue of the quick and easy integration of the shock-absorbing portion with an adequate padding.

The saddle cover is also cost effective and quick to manufacture by means of the above described injection molding techniques.

In order to meet contingent and specific needs, those skilled in the art can make several changes and variations to the solutions described above, all contained within the scope of the invention as defined by the following claims.

## Claims

1. A saddle cover (4) for a bicycle saddle having a saddle cover body (8) which overall delimits a cavity (12) configured to cover and house at least partially a bicycle saddle, said saddle cover body (8) comprising:
- a shock-absorbing portion (16), configured to cover the seat of the associable saddle at least partially,
- a fitting portion (20) arranged around the perimeter of the shock-absorbing portion (16) and configured to embrace and cover said saddle at least partially,
- wherein the fitting portion (20) is made of an injected thermoplastic material,
- wherein said fitting portion (20) has, on a lower face (24), opposite to the shock-absorbing portion (16), an inlet opening (28) adapted to facilitate the insertion and covering by superposition of the associable saddle,
- wherein said lower face (24) is substantially taut and flat.

2. A saddle cover (4) for a bicycle saddle according to claim 1, wherein said inlet opening (28) has a symmetrical configuration tapering from a rear end (32), intended to cover a rear portion of the saddle, to a front end (36), intended to cover a front portion of the saddle.

3. A saddle cover (4) for a bicycle saddle according to claim 2 wherein said inlet opening (28) has a symmetrical, isosceles trapezoid configuration tapering from said rear end (32) to said front end (36) intended to cover a front portion of the saddle.

4. A saddle cover (4) for a bicycle saddle according to claim 3, wherein the ratio of the long base (33) to a short base (35) of said isosceles trapezoid inlet opening (28) is greater than or equal to 1.5.

5. A saddle cover (4) for a bicycle saddle according to any one of the preceding claims, wherein the fitting portion (20) has a minimum tensile strength of 200%.

6. A saddle cover (4) for a bicycle saddle according to any one of the preceding claims, wherein the saddle cover (4) comprises a padding (40) which is removably insertable into the cavity (12) of the saddle cover body (8), between the shock-absorbing portion (16) and the fitting portion (20), wherein said padding (40) is made of a viscoelastic, flexible and/or shape memory material.

7. A saddle cover (4) for a bicycle saddle according to any one of the preceding claims, wherein the shock-absorbing portion (16), on the side opposite to said cavity (12), has a non-stick coating element (48) and/or a non-stick surface treatment (48).

8. A saddle cover (4) for a bicycle saddle according to claim 7, wherein said non-stick coating element (48) comprises a non-stick fabric on the side opposite to the cavity (12).

9. A saddle cover (4) for a bicycle saddle according to claim 8, wherein said non-stick fabric is an elastic fabric having a basis weight between 130 and 190 grams.

10. A saddle cover (4) for a bicycle saddle according to any one of claims 7 to 9, wherein said non-stick surface treatment (48) comprises a texture which negatively traces the texture of a fabric provided with a plurality of ridges and grooves so as to overall reduce an outer contact surface of the shock-absorbing portion (16), on the side opposite to the cavity (12).

11. A saddle cover (4) for a bicycle saddle according to any one of claims 7 to 10, wherein said non-stick surface treatment (48) comprises a photoengraving treatment.

12. A method for manufacturing a saddle cover (4) according to any one of claims 1 to 11, comprising the steps of:
- preparing an injection mold comprising an injection chamber,
- preparing a male which reproduces at least partially the shape of an associable saddle for a cycle and the shape of said inlet opening (28), and at least partially delimiting said injection chamber with said male,
- injecting the saddle cover body (8) into the injection chamber of the mold.

13. A method for manufacturing a saddle cover (4) for a bicycle saddle according to claim 12, comprising the steps of:
- inserting into the injection chamber, as a non-stick coating element (48), an elastic and non-stick fabric on the side opposite to the injection chamber, at the shock-absorbing portion (16),
- injecting the polymer material of the saddle cover body (8) so as to soak, or wet at least partially, and firmly fasten to the saddle cover body (8), said elastic and non-stick fabric.

14. A method for manufacturing a saddle cover (4) for a bicycle saddle according to claim 12, comprising the steps of:
- inserting into the injection chamber, as a provisional non-stick coating element (48), an elastic and non-stick fabric on the side facing the injection chamber, at the shock-absorbing portion (16),
- injecting the polymer material of the saddle cover body (8) so as to wet the elastic and non-stick fabric at least partially,
- waiting for the saddle cover body (8) to solidify,
- removing said elastic and non-stick fabric (48), so as to obtain on the shock-absorbing portion a surface which negatively traces the texture of the elastic and non-stick fabric.

15. A method for manufacturing a saddle cover (4) for a bicycle saddle according to any one of claims 12 to 14, comprising the steps of molding a padding (40) substantially counter-shaped with respect to said cavity (12), so as to be interposed between the shock-absorbing portion (16) and the associable saddle.
